# EUROPEAN PATENT APPLICATION

(11) **EP 1 921 856 A1**
(43) Date of publication of application: **14.05.2008**
(21) Application number: 06023526.4
(22) Date of filing: 13.11.2006
(51) Int. Cl.: H04N 7/16, H04N 5/00

(54) **Method and system for selecting television channels**

(71) Applicant: Koninklijke KPN N.V., 2516 CK The Hague (NL)
(72) Inventor: Koster, Arian, 3641 GS Mijdrecht (NL); Van Steenbergen, Ate Sander, 9737 NN Groningen (NL)
(74) Representative: Wuyts, Koenraad Maria

(57) **Abstract**

It is disclosed that meta data that is comprised by a data stream that is sent from a content distribution system (20) to a set-top box (5) can be used for providing the set-top box (5) with a selection control parameter. Based on this selection control parameter selection information can be stored in a memory (4) comprised by the set-top box (5). The memory (4) is accessed when it is to be determined which television channel should be selected when a set-top box (5) is switched on that is connected to a television set (6). At the time that the set-top box (5) is switched on, the selection information that is based on the selection control parameter is residing in the memory (4). The selection control parameter can be inserted in the meta data of a data stream that is received by the set-top box (5).

## Description

### FIELD OF THE INVENTION

The present invention relates to a method and a system for providing information to a set-top box that is used for selecting a television channel when the set-top box is switched on.

### BACKGROUND OF THE INVENTION

Users that are able to use digital television services often use a set-top box that is connected to their television set. A set-top box usually resides at the user's premise and can be used for selecting one particular data stream out of a collection of data streams that is provided to a device comprised by the access infrastructure of a telecom provider such as a digital subscriber line access multiplexer (DSLAM).

In known set-top boxes there is often a facility that enables to store which television channels have been selected by the user. For instance, it can be possible that the set-top box stores in a memory unit which television channel was selected at the time that the television set connected to the set-top box was switched off. When the set-top box is switched on again the set-top box will use the stored information, and the television channel is automatically selected that was selected at the time the television set was switched off. A disadvantage of this is that the television channel that is automatically selected when a television set is switched is not an appropriate one. For instance, when switching on the television set at eight o'clock one would expect a television channel via which the eight o'clock news is broadcasted rather than a television channel via which cultural programs are broadcasted. The latter television channel may be of interest for the user later in the evening but not at prime time. Another disadvantage is related to the privacy of users. Especially in cases wherein a television set is shared amongst several users it might be not desirable. For instance, switching on the television set could inform a user about which television channel was selected by another user when the television set was switched off.

### AIM OF THE INVENTION

It is an object of the invention to eliminate the drawbacks of the prior art and to provide a method and a system for providing information to be used for selecting a particular television channel when a set-top box is switched on.

### SUMMARY OF THE INVENTION

In accordance with this invention, a method is disclosed for providing selection information to a set-top box that is connected to a television set, the set-top box receiving a data stream comprising content data and meta data from a content distribution system via a network and a signal distribution device, said selection information being used for selecting a data stream out of a plurality of data streams that is received by the signal distribution device when the set-top box is switched on, the method comprising the steps of:
- sending a selection control parameter in said meta data from the content distribution system to the set-top box;
- determining, based on the selection control parameter, which selection information is to be stored in a memory comprised by the set-top box ; and
- storing said selection information in the memory.

In a first aspect of the present invention it is disclosed that meta data that is comprised by a data stream that is sent from a content distribution system to a set-top box can be used for providing the set-top box with a selection control parameter. The set-top box can be connected to a signal distribution device that resides in the infrastructure of a provider. A signal distribution device is for instance a digital subscriber line access multiplexer (DSLAM) or other type of distributing and multiplexing device. A signal distribution device is able to receive multiple signals via a network (such as a core network) from the content distribution system, and distribute one or more of these signals to the customer's locations. For cable networks, for instance, the signal distribution device can be an edge QAM (Quadrature Amplitude Modulation) device. The edge QAM is located in the access infrastructure for cable networks and provides e.g. remote multiplexing and QAM modulation. The content distribution system can for instance be an IP TV platform, a platform from which content is distributed via satellite, or via a copper-, fiber- or cable infrastructure. The selection control parameter is sent from the content distribution system via the signal distribution device to the set-top box. The distribution mechanism via which content is distributed or sent from the content distribution platform can be any type of distribution mechanism such as but not limited to broadcasting, multicasting, unicasting or video on demand.

Based on this selection control parameter selection information can be stored in a memory comprised by the set-top box. This memory is accessed when it is to be determined which television channel should be selected when a set-top box is switched on that is connected to a television set. In general a set-top box will be switched on when the television set to which it is connected is switched on. However, it is also possible that a set-top box can be switched on and off separately from the television set. It is also possible that the set-top box is integrated in the television set. At the time that the set-top box is switched on, the selection information that is based on the selection control parameter is residing in the memory. This is in contrast to known set-top boxes where the memory contains information that reflects which television channel was selected at the time that the television set was switched off. The selection control parameter can be inserted in the meta data of a data stream that is received by the set-top box.

An advantage of the present invention is that it can be controlled from a source external to the set-top box which television channel should be selected when the television set connected to the set-top box is switched on. The selection control parameter can be a channel number or an instruction code. If the selection control parameter is a channel number, this channel number can be stored in a memory of the set-top box that is used for storing information identifying the television channel that was selected at the time that the television set was switched off. The channel number received via the meta data can replace the latter information. Alternatively, the channel number can also be stored in the memory without replacing the information already residing at the memory. In the latter situation there is a choice possible between using the information that was already in the memory or using the channel number that was extracted from the meta data.

It is also possible that the selection control parameter is an instruction code. The selection information to be stored in the memory is then derived from the instruction code via an algorithm. For instance, the instruction code causes information already residing in the memory to be replaced by default selection information that is available in the set-top box. In this way, it is possible that each individual set-top box has its own default channel number. This default channel number may or may not be dependent on the moment of time that it replaces the information that already resides in the memory.

In yet another aspect of the present invention the selection control parameter is sent according to a time schedule. It can be needed that the selection control parameter is sent to the set-top box on a regular basis because the user frequently selects another channel. Each time the user selects another channel, information is stored in the memory identifying the most recently selected channel. This information needs to be replaced every time by selection information retrieved from the selection control parameter in order to avoid that the most recently selected television channel is selected when the set-top box is switched on at a later moment in time.

It is also possible that the value that is assigned to the selection control parameter depends on the moment of time that it is sent. As a result, the television channel that is selected when the set-top box is switched on differs from time to time.

The selection control parameter may be sent to the set-top box only in the meta data relating to certain television programs. If during a certain television program no selection control parameter has been sent to the set-top box, and this television program is selected when the set-top box is switched off, then this television program is selected when the set-top box is switched on later.

Another possible mechanism is to make use of an electronic program guide (EPG). An EPG is known in the art and is sent from the content distribution system to the set-top box. The EPG contains information about which programs are broadcasted via which television channels during a certain time period. A user is able to select, for instance by means of a remote control, a program in order to have additional information about that program (e.g. information about actors and product information) displayed on the screen of the television set. Since the EPG can be regarded as meta data, it is according to the present invention also possible to include one or more selection control parameters in the EPG. A user is then able to select if it is required with regard to a particular television program to apply a selection control parameter. For instance, if such an option is selected by the user and that particular television program is actually selected by the user at the time the set-top box is switched off, the television channel via which that television program was broadcasted will not be selected when the set-top box is switched on again.

According to the present invention also a set-top box is disclosed that comprises an interface for connecting the set-top box to a television set and a data stream receiving unit for receiving a data stream comprising content data and meta data, the data stream receiving unit being able to extract a selection control parameter from said meta data and to generate selection information based on said selection control parameter, said selection information being used for selecting a particular television channel when the set-top box is switched on.

### BRIEF DESCRIPTION OF THE DRAWING FIGURES

The foregoing aspects and many of the attendant advantages of this invention will become better understood by reference to the following detailed description, when taken in conjunction with the accompanying drawing, wherein:
FIG. 1 is a block diagram illustrating an architecture for providing digital television services to a user.
FIG. 2 is a block diagram depicting a possible embodiment of the present invention.

### EXEMPLARY EMBODIMENTS

For the purpose of teaching of the invention, preferred embodiments of the method and devices of the invention are described in the sequel. It will be apparent to the person skilled in the art that other alternative and equivalent embodiments of the invention can be conceived and reduced to practice without departing from the true spirit of the invention, the scope of the invention being limited only by the appended claims as finally granted.

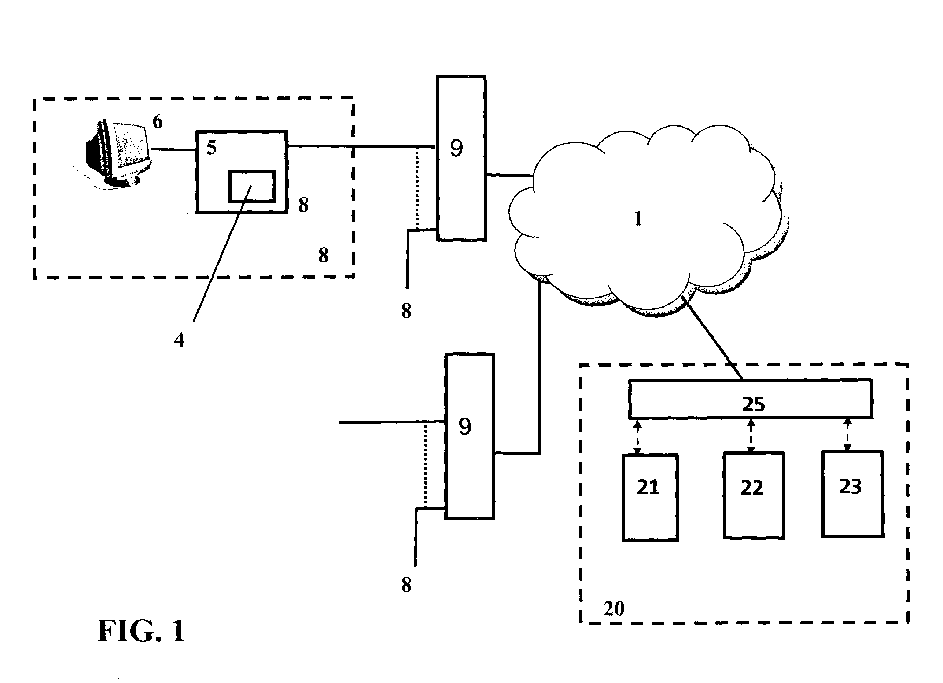

In FIG. 1 an IP based network (1) is depicted via which digital television services can be provided to users. The IP based network (1) can be based on any type of communication technology, such as FTTH (fiber to the home), copper, ADSL or VDSL. It may also be possible that the IP based network (1) is a mobile network or that the IP based network (1) comprises network segments based on mobile technology.

A content distribution system (20) is connected to the IP based network (1). The content distribution system (20) can for instance be an IP TV platform. In the architecture according to FIG. 1 there is a DSLAM (9) (Digital Subscriber Line Access Multiplexer) that is connected to the IP based network (1) and to a customer environment (8). There can be several customer environments (8) connected to a DSLAM (9), and there can be several DSLAM's (9) connected to the IP based network (1).

The DSLAM (9) is in general part of an access infrastructure and may or may not be operated by the same party that operates the IP based network (1). A DSLAM (9) takes connections from many customers and aggregates them onto a single, high-capacity connection to the IP based network (1). A television set (6) is connected to a set-top box (STB) (5) for the provisioning of digital and/or interactive television, and an IP telephone (7) for providing telephony services. The set-top box (5) is for instance connected to the DSLAM (9) via a DSL modem.

The content distribution system (20) may comprise a network interface (25) for transmitting content via the IP based network (1) to the set-top box (5). One or more communication protocol stacks can be comprised by the network interface (25) to enable a proper communication path to be established between the content distribution system (20) and the set-top box (5). For instance, the content can be transmitted via the IP based network by means of streaming data. Several types of distribution concepts may be used such as broadcasting or multicasting. The content distributions system (20) may also comprise one or more media servers (21, 22, 23) on which video and audio content is residing. There can be for instance one server being comprised by the content distribution system (20) for each television channel that is broadcasted.

Each television channel is broadcasted to the DSLAM's (9). A set-top box (5) can select one particular data stream out of a collection of data streams that is provided to a DSLAM (9). For this purpose the Internet Group Management Protocol (IGMP) can be used. For instance, if a particular data stream is to be selected the set-top box (5) can send a 'join' message to the DSLAM (9). The 'join' message is a message already defined in the IGMP protocol. As a result, a user is able by means of this mechanism to select one particular television channel to be shown on his television set (6). Information relating the selected data stream or television channel (such as the channel number) is stored by the set-top box (5) in a memory (4) that is comprised by the set-top box (5). Storage is accomplished at the time that the user selects a particular television channel. When the television set (6) is switched off the stored information remains in the memory (4), and when the set-top box (5) is switched on again later the stored television channel is selected to be shown on the television set (6).

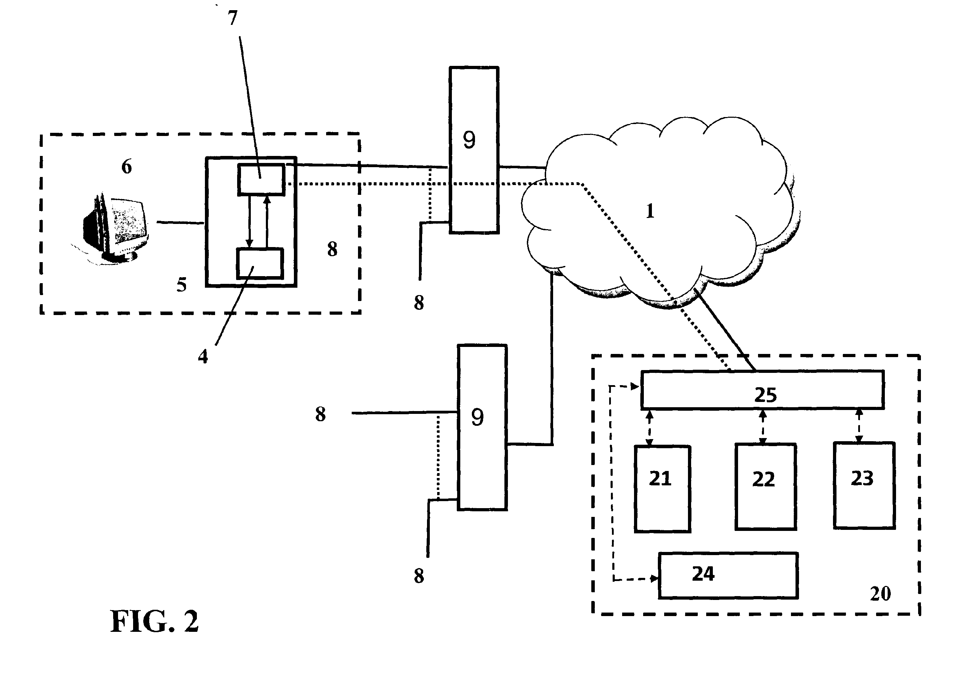

In FIG. 2 it is depicted that meta data is sent from the content distribution system (20) to a data stream receiving unit (7) that is comprised by the set-top box (5). Meta data is part of the streamed data that is sent from the content distribution system (20) to the set-top box (5), and is for instance originated from a control unit (24) that is comprised by the content distribution system. Meta data usually contains information regarding the content data that is sent by means of the data stream to the set-top box (5).

Meta data may be included in one or more data streams that are sent by the content distribution system (20) to the DSLAM (9). Using the meta data the set-top box (5) is able to decode the content data in the data stream resulting in the digital content originating from the distribution system (20). According to the present invention information is provided to the set-top box (5) that can be used by the set-top box (5) for determining which television channel is to be selected when the set-top box (5) is switched on. This information is provided to the set-top box (5) by means of a selection control parameter that is included in the meta data. The selection control parameter is for instance generated by the control unit (24) and is contained in a field of one of the data packets that are part of the meta data. The selection control parameter can be a channel number or an instruction code. If a particular data stream, i.e. television channel, is selected by the user the meta data in this particular data stream can be used to send the selection control parameter to the set-top box (5). When the television set (6) is switched off the information stored in the memory (4) as a result of receiving a selection control parameter in the meta data remains in the memory (4). This information is later used to select a particular television channel when the set-top box (5) is switched on.

When the meta data that includes the selection control parameter is received by the data stream receiving unit (7) it recognizes the selection control parameter and determines the selection control parameter type, i.e. channel number or instruction code. If the selection control parameter is a channel number, the channel number is stored in the memory (4) replacing the channel number that was stored in the memory at the time that the corresponding television channel was selected by the user (and which channel number would be used to select a television channel when the television set would be switched on at a later moment of time). The selection control parameter can be sent to the set-top box (5) regularly, for instance on a timely basis, whereby the value assigned to the selection control parameter can be different each time the selection control parameter is sent to the set-top box (5). In other words, for several moments of time during a day a television channel will be selected when switching on the television set (6) that is appropriate to that particular moment of time. For instance, the memory (4) might have been provided with channel number X at 19:45 so that television channel X is selected when the set-top box (5) is switched on at 19:55 because via television channel X the eight o'clock news is broadcasted. At 21:35 the memory (4) might have been provided with channel number Y so that television channel Y is selected when the set-top box (5) is switched on at 21:45.

It is obvious that there are several types of moments that are relevant. The first type of moment is the moment that a particular television channel is selected. At this moment the set-top box (5) stores this selection in the memory (4). The second type of moment is the moment that the selection control parameter is sent to the set-top box (5), resulting in a change of the contents of the memory (4). The third type of moment is the moment that the set-top- box is switched off. The contents of the memory at this moment can be used later when the set-top box (5) is switched on again.

According to the present invention it is also possible to provide the set-top box (5) with information to be used for selecting a particular television channel when switching on the television set (6) by means of sending a selection control parameter to the set-top box (5) that relates to the profile of the user that owns or uses the set-top box (5). It may by the case that a particular user prefers to have one particular television channel selected every time when the set-top box (5) is switched on regardless of the time of the day. The selection control parameter identifying the particular preferred television channel is sent to the set-top box (5) regularly to make sure that the preferred channel number is stored in the memory (4). Sending in the meta data the selection control parameter to one particular set-top box or a particular group of set-top boxes requires other techniques than sending the selection control parameter to all set-top boxes. However, these techniques are known in the state of the art (for example multicasting techniques).

If the selection control parameter is an instruction code, the data stream receiving unit recognizes the instruction code after which an instruction is sent to the memory (4). The instruction can for instance be an erase instruction to erase the information that is stored in memory (4). The channel number that is stored thereupon in the memory (4) may be determined by the set-top box (5). For instance, there may be a default channel number available in the set-top box (5) that is placed in the memory (4). If the set-top box (5) stores several successive channel numbers (e.g. reflecting the successive television channels that has been viewed by the user during the last 24 hours), there may be another instruction code that instructs the set-top box (5) to determine the most popular television channel, and to store in the memory the corresponding channel number. As a consequence, the television channel is selected when switching in the television set (6) that has turned out to be the most popular one during the last 24 hours.

It may be possible that the set-top box (5) needs a modification in order to be able to receive and process the selection control parameter. However, the set-top box (5) is already configured to receive meta data so that in general only minor changes are required.

## Claims

1. A method for providing selection information to a set-top box (5) that is connected to a television set (6), the set-top box (5) receiving a data stream comprising content data and meta data from a content distribution system (20) via a network (1) and a signal distribution device (9), said selection information being used for selecting a data stream out of a plurality of data streams that is received by the signal distribution device (9) when the set-top box (5) is switched on, the method comprising the steps of:
- sending a selection control parameter in said meta data from the content distribution system (20) to the set-top box (5) ;
- determining, based on the selection control parameter, which selection information is to be stored in a memory (4) comprised by the set-top box (5); and
- storing said selection information in the memory (4).

2. Method according to claim 1, wherein the selection control parameter is a channel number.

3. Method according to claim 1, wherein the selection control parameter is an instruction code.

4. Method according to claim 3, the instruction code causes selection information residing in the memory (4) to be replaced by default selection information that is available in the set-top box (5)

5. Method according to any of the preceding claims, wherein the moment of time that the selection control parameter is sent is scheduled according to a time table.

6. Method according to claim 5, wherein the value of the selection control parameter is dependent on the moment of time that the selection control parameter is sent.

7. Method according to any of the preceding claims, wherein the value of the selection control parameter is determined by the profile of the user that uses set-top box (5).

8. A set-top box (5) comprising an interface for connecting the set-top box (5) to a television set (6) and a data stream receiving unit (7) for receiving a data stream comprising content data and meta data, the data stream receiving unit (7) being able to extract a selection control parameter from said meta data and to generate selection information based on said selection control parameter, said selection information being used for selecting a particular television channel when the set-top box (5) is switched on.

9. Set-top box (5) according to claim 8, the set-top box (5) comprising a memory (4) for storing said selection information.
